# EUROPEAN PATENT SPECIFICATION

(11) **EP 2 157 777 B1**
(45) Date of publication and mention of the grant of the patent: **03.12.2014**
(21) Application number: 09250155.0
(22) Date of filing: 21.01.2009
(51) Int. Cl.: H04N 1/32, H04N 1/00

(54) **Mobile terminal and geotagging method thereof**
Mobiles Endgerät und zugehöriges Geotagging-Verfahren
Terminal mobile et son procédé de géocodage

(30) Priority: 20.08.2008 KR 20080081342
(43) Date of publication of application: 24.02.2010
(73) Proprietor: LG Electronics Inc., Seoul (KR)
(72) Inventor: Lee, Jung-Sub, Seoul (KR); Yoon, Tae-Sook, Incheon (KR); Woo, Sung-Ho, Goyang, Gyeonggi-do (KR)
(74) Representative: Beresford, Keith Denis Lewis

(56) References cited:
- EP-A- 1 566 743
- US-A1- 2003 058 344
- US-A1- 2004 201 676
- US-A1- 2005 162 699
- US-A1- 2007 179 705
- US-A1- 2007 200 862

## Description

### BACKGROUND OF THE INVENTION

### Field of the Invention

The present invention relates to a mobile terminal for capturing images.

### Description of the Related Art

A mobile terminal is a device which may be configured to perform various functions. Examples of such functions include data and voice communications, capturing images and video via a camera, recording audio, playing music files via a speaker system, and displaying images and video on a display. Some terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components which form the mobile terminal.

Recently, as the terminals employing the GPS technology, researches are actively ongoing to provide services using GPS techniques.

US 2007/200862 discloses an imaging device displaying an indication whether or not it is able to acquire location information.

With such devices, it is very easy and inexpensive for users to capture images. In consequence many users now capture images in large numbers, and subsequent management of the images can be difficult because of the large number. It is an aim of the invention to solve the above problem.

### SUMMARY OF THE INVENTION

According to one aspect, the present invention provides a mobile terminal comprising, a camera for capturing an image of a subject, a location information module for acquiring current location information of the mobile terminal, and a controller for driving the location information module, automatically when the camera is driven, the controller being configured to tag the location information to the image of the subject if image capturing is requested once acquiring of the location information is completed characterized in that the controller is further configured, (i) for displaying a message informing a user of the mobile terminal that the acquiring of the location information is not completed and a message requesting the user to indicate whether to wait until the acquiring of the location information is completed if the image capturing is requested while the location information is being acquired, and (ii) for checking a response of the user to the request, and waiting until the acquiring of the location information is completed in response to an input by the user thereof and tagging the location information to the image of the subject once the acquiring of the location information is completed, or storing the image without the location information in response to an input by the user thereof.

The controller may change an icon displayed on a display according to whether the state of acquiring the location information is in progress, or may change the color of the icon.

In accordance with another aspect, present invention provides a method of geotagging in a mobile terminal, the method comprising, driving a location information module automatically when camera driving is requested, capturing an image of a subject through the camera, and performing tagging on the image of the subject by using location information acquired by the location information module, characterized in that the method further comprises,(i) displaying a message informing a user of the mobile terminal that the acquiring of the location information is not completed and a message requesting the user to indicate whether to wait until the acquiring of the location information is completed if the image capturing is requested while the location information is being acquired, and checking a response of the user to the request, and waiting until the acquiring of the location information is completed in response to an input by the user thereof and tagging the location information to the image of the subject once the acquiring of the location information is completed, or storing the image of the subject without the location information in response to an input by the user thereof.

Further scope of applicability of the present invention will become apparent from the detailed description given hereinafter. However, it should be understood that the detailed description and specific examples, while indicating preferred embodiments of the invention, are given by illustration only, since various changes and modifications will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 is a schematic block diagram of a mobile terminal implementing an embodiment of the present invention;
FIG. 2 is a front perspective view of a mobile terminal implementing an embodiment of the present invention;
FIG. 3 is a rear perspective view of a mobile terminal implementing an embodiment of the present invention;
FIG. 4 is a block diagram of a wireless communication system with which the mobile terminal according to an embodiment of the present invention is operable;
FIG. 5 is a flow chart illustrating a geotagging method of a mobile terminal according to an embodiment of the present invention;
FIG. 6 is a view of screen displays showing one example of setting a geotagging function in the mobile terminal according to an embodiment of the present invention;
FIG. 7 is a view of screen displays showing one example of releasing a geotagging function in the mobile terminal according to an embodiment of the present invention;
FIGs. 8A to 8C are views of screen displays showing an example of performing geotagging after acquiring location information in the mobile terminal according to one embodiment of the present invention;
FIG. 9 is a view of screen displays showing an example of performing geotagging after acquiring location information in the mobile terminal according to another embodiment of the present invention;
FIG. 10 is a view of screen displays showing one example of performing geotagging in the mobile terminal according to an embodiment of the present invention;
FIG. 11 is a view of screen displays showing another example of performing geotagging in the mobile terminal according to an embodiment of the present invention;
FIG. 12 is a view of screen displays showing still another example of performing geotagging in the mobile terminal according to an embodiment of the present invention; and
FIG. 13 is a view of screen displays showing yet example of performing geotagging in the mobile terminal according to an embodiment of the present invention.

### DETAILED DESCRIPTION OF THE INVENTION

The mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself. It should be noted that 'module', 'part', and 'unit' can be substituted or mixed.

The mobile terminal may be implemented in various forms. For example, the described mobile terminal functionality may be implemented in portable devices such as mobile phones, smart phones, notebook computers, digital broadcast receivers, PDAs (Personal Digital Assistants), PMPs (Portable Multimedia Player), navigation devices, and the like, and in fixed type devices such as digital TVs, desktop computers, or the like. In the following description, a terminal is assumed to be a mobile terminal, but it would be understood by a person in the art that the present invention can be also applicable to fixed types of terminals except for any elements especially configured for a mobile purpose.

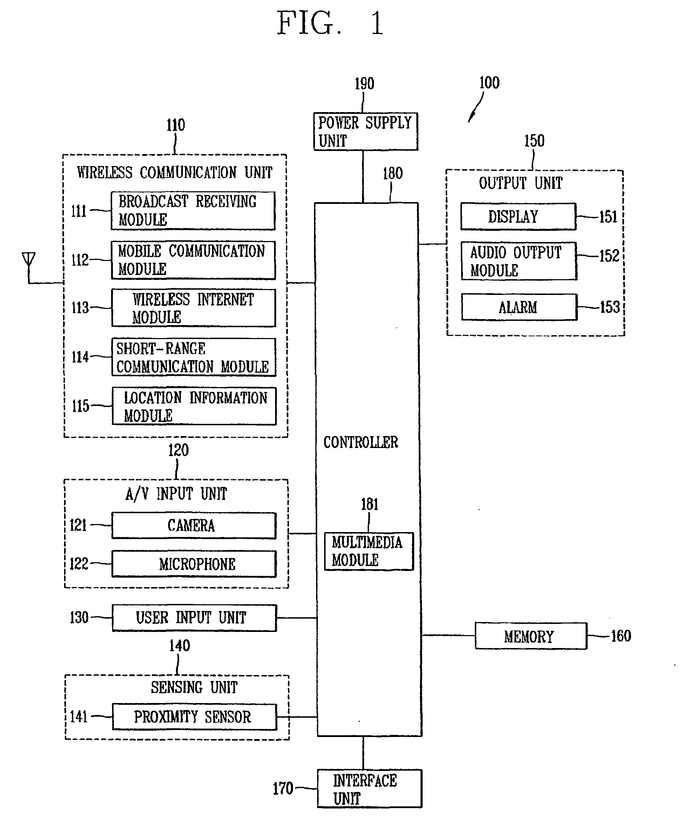

FIG. 1 is a schematic block diagram of a mobile terminal implementing an embodiment of the present invention.

The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190.

FIG. 1 shows the mobile terminal as having various components, but it should be understood that implementing all of the illustrated components is not an essential requirement. More or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module115.

The broadcast receiving module 111 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. Examples of the broadcast associated information may include information regarding a broadcast channel, a broadcast program, a broadcast service provider, etc. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network (e.g., that operates according to standards such as 3GPP, 3GPP2, IEEE, CDMA, GSM, OMA, so-called 4G techniques, etc.) and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 is configured to be suitable for every broadcast system that provides a broadcast signal as well as the above-mentioned digital broadcast systems. Broadcast signals and/or broadcast-associated information received via the broadcast receiving module 111 may be stored in the memory 160 (or another type of storage medium).

The mobile communication module 112 transmits and/or receives radio signals to and/or from at least one of a base station (e.g., access point, Node B, etc.), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for checking or acquiring a location (or position) of the mobile terminal, for example in the form of a coordinate position. A typical example of the location information module115 is a GPS (Global Positioning System) module. According to the current technology, the GPS module measures an accurate time and distance from three or more satellites and accurately calculates a current location of the mobile terminal by applying trigonometry to the measured information Currently, a method of acquiring location and time information by using three satellites and performing error correction on the calculated location and time information with a single satellite is widely used. In addition, the GPS module calculate speed information by continuously calculating a current location in real time.

The A/V input unit 120 is configured to receive an audio or video signal. The AN input unit 120 may include a camera 121 (or other image capture device) and a microphone 122 (or other sound pick-up device). The camera 121 processes image data of still pictures or video obtained by an image capture device in a video capturing mode or an image capturing mode. The processed image frames may be displayed on a display 151 (or other visual output device).

The image frames processed by the camera 121 may be stored in memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate key input data from commands entered by a user to control various operations of the mobile terminal. The user input unit 130 allows the user to enter various types of information, and may include a keypad, a dome switch, a touch pad (e.g., a touch sensitive member that detects changes in resistance, pressure, capacitance, etc. due to being contacted), a jog wheel, a jog switch, and the like. In particular, when the touch pad is overlaid on the display 151 in a layered manner, it may form a touch screen.

The sensing unit 140 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141, which will be described in association with the touch screen.

The interface unit 170 (or other connection means) serves as an interface by which at least one external device may be connected with the mobile terminal 100. For example, the external devices may include wired or wireless headset ports, an external power supply (or battery charger) ports, wired or wireless data ports, memory card ports, ports for connecting a device having an identification module, audio input/output (I/O) ports, video I/O ports, earphone ports, or the like.

The identification module may be a memory chip (or other element with memory or storage capabilities) that stores various information for authenticating a user's authority for using the mobile terminal 100 and may include a user identity module (UIM), a subscriber identity module (SIM) a universal subscriber identity module (USIM), and the like. In addition, the device having the identification module (referred to as the 'identifying device', hereinafter) may take the form of a smart card. Accordingly, the identifying device may be connected with the terminal 100 via a port or other connection means.

The interface unit 170 may be used to receive inputs (e.g., data, information, power, etc.) from an external device and transfer the received inputs to one or more elements within the mobile terminal 100 or may be used to transfer data between the mobile terminal and an external device.

In addition, when the mobile terminal 100 is connected with an external cradle, the interface unit 170 may serve as a conduit to allow power from the cradle to be supplied therethrough to the mobile terminal 100 or may serve as a conduit to allow various command signals input from the cradle to be transferred to the mobile terminal therethrough. Various command signals or power input from the cradle may operate as signals for recognizing when the mobile terminal is properly mounted on the cradle.

The output unit 150 is configured to provide outputs in a visual, audible, and/or tactile manner (e.g., audio signal, video signal, alarm signal, vibration signal, etc.). The output unit 150 may include the display 151, an audio output module 152, an alarm 153, and the like.

The display 151 may display information processed in the mobile terminal 100. For example, when the mobile terminal 100 is in a phone call mode, the display 151 may display a User Interface (UI) or a Graphic User Interface (GUI) associated with a call or other communication (such as text messaging, multimedia file downloading, etc.). When the mobile terminal 100 is in a video call mode or image capturing mode, the display 151 may display a captured image and/or received image, a UI or GUI that shows videos or images and functions related thereto, and the like.

Meanwhile, when the display 151 and the touch pad are overlaid in a layered manner to form a touch screen, the display 151 may function as both an input device and an output device. The display 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like. Some of them may be configured to be transparent to allow viewing of the exterior, which may be called transparent displays. A typical transparent display may be, for example, a TOLED (Transparent Organic Light Emitting Diode) display, or the like. The mobile terminal 100 may include two or more displays (or other display means) according to its particular desired embodiment. For example, the mobile terminal may include both an external display module (not shown) and an internal display (not shown).

The touch screen may be configured to detect a touch input pressure as well as a touch input position and a touch input area.

A proximity sensor 141 may be disposed within or near the touch screen. The proximity sensor 141 is a sensor for detecting the presence or absence of an object relative to a certain detection surface or an object that exists nearby by using the force of electromagnetism or infrared rays without a physical contact. Thus, the proximity sensor 141 has a considerably longer life span compared with a contact type sensor, and it can be utilized for various purposes.

Examples of the proximity sensor 141 may include a transmission type photo sensor, a direct reflection type photo sensor, a mirror-reflection type photo sensor, an RF oscillation type proximity sensor, a capacitance type proximity sensor, a magnetic proximity sensor, an infrared proximity sensor, and the like.

The operational principle of the RF oscillation type proximity sensor, among the implementable proximity sensors, will be described as an example. When an object approaches the sensor detection surface in a state that an RF (Radio Frequency) of a static wave is oscillated by an oscillation circuit, the oscillation amplitude of the oscillation circuit is attenuated or stopped, and such a change is converted into an electrical signal to detect the presence or absence of an object. Thus, even if any material other than metallic one is positioned between the RF oscillation proximity sensor and the object, a proximity switch can detect the object intended to be detected without an interference by the object.

Without the proximity sensor 141, if the touch screen is an electrostatic type, the approach of a pointer (stylus) can be detected based on a change in a field according to the approach of the pointer.

Thus, although the pointer is not actually brought into contact with the touch screen but merely positioned close to the touch screen, the position of the pointer and the distance between the pointer and the touch screen can be detected. In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor 141, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be output to the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, or other sound generating device.

The alarm 153 (or other type of user notification means) may provide outputs to inform about the occurrence of an event of the mobile terminal 100. Typical events may include call reception, message reception, key signal inputs, a touch input etc. In addition to audio or video outputs, the alarm 153 may provide outputs in a different manner to inform about the occurrence of an event. For example, the alarm 153 may provide an output in the form of vibrations (or other tactile or sensible outputs). When a call, a message, or some other incoming communication is received, the alarm 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display 151 or the audio output module 152.

The memory 160 (or other storage means) may store software programs or the like used for the processing and controlling operations performed by the controller 180, or may temporarily store data (e.g., a phonebook, messages, still images, video, etc.) that have been input or which are to be output. In addition, the memory 160 may store data regarding various patterns of vibrations and audio signals to be output when a touch is applied to the touch screen.

The memory 160 may include at least one type of storage medium including a Flash memory, a hard disk, a multimedia card, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, and the like. Also, the mobile terminal 100 may cooperate with a network storage device that performs the storage function of the memory 160 over a network connection.

The controller 180 (such as a microprocessor or the like) typically controls the general operations of the mobile terminal. For example, the controller 180 performs controlling and processing associated with voice calls, data communications, video calls, and the like. In addition, the controller 180 may include a multimedia module 181 for reproducing (or playing back) multimedia data. The multimedia module 181 may be configured within the controller 180 or may be configured to be separate from the controller 180.

The controller 180 may perform a pattern recognition processing to recognize a handwriting input or a picture drawing input performed on the touch screen as characters or images.

The power supply unit 190 receives external power (via a power cable connection) or internal power (via a battery of the mobile terminal) and supplies appropriate power required for operating respective elements and components under the control of the controller 180.

Various embodiments as described herein may be implemented in a computer-readable medium using, for example, computer software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented in the controller 180.

For software implementation, the embodiments such as procedures or functions may be implemented together with separate software modules that allow performing of at least one function or operation. Software codes can be implemented by a software application (or program) written in any suitable programming language. The software codes may be stored in the memory 160 and executed by the controller 180.

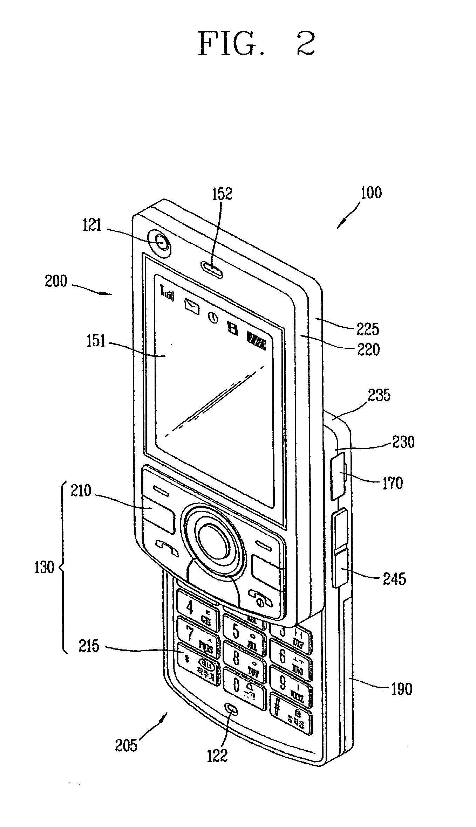

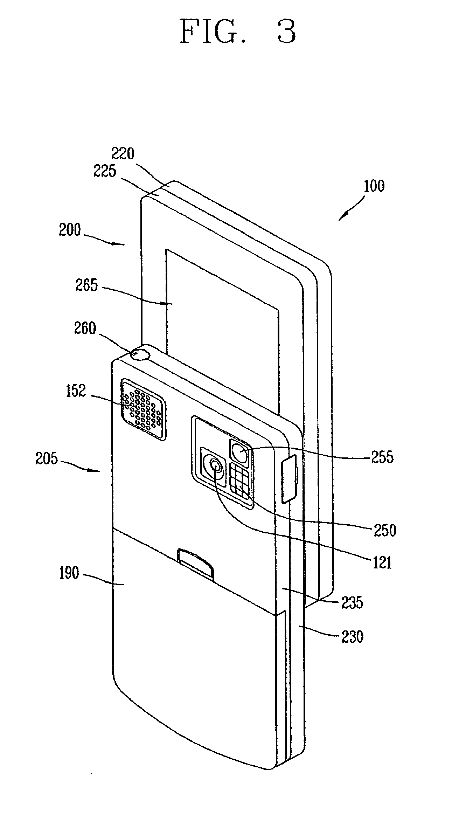

So far, the mobile terminal has been described from the perspective of its functions. Hereinafter, external elements of the mobile terminal will be described from the perspective of their functions with reference to FIGs. 2 and 3.

The mobile terminal may be implemented in a variety of different configurations. Examples of such configurations include folder-type, bar-type, swing-type, a slide type, as well as various other configurations. The following description will primarily relate to a slide-type mobile terminal. However, such description can equally apply to other types of mobile terminals.

FIG. 2 is a front perspective view of the mobile terminal according to an embodiment of the present invention.

The mobile terminal 100 according to the present invention includes a first body 200, and a second body 205 that can be slidably moved along at least one direction with respect to the first body 200. In case of a folder type mobile phone, the mobile terminal 100 may include a first body and a second body having one side that can be folded or unfolded with respect to the first body.

A state in which the first body is disposed to overlap with the second body 205 may be called a closed configuration, and as shown in FIG. 2, a state in which at least a portion of the second body 205 is exposed may be called an open configuration.

Although not shown, the mobile terminal according to the present invention may be the folder type mobile terminal including the first body and the second body having one side to be folded or unfolded with respect to the first body. Here, a state in which the second body is folded may be called a closed configuration, and a state in which the second body is unfolded may be called an open configuration.

In addition, although not shown, the mobile terminal according to the present invention may be a swing type mobile terminal including a first body and a second body configured to be swingable with respect to the first body. Here, a state in which the first body is disposed to overlap with the second body may be called a closed configuration, and a state in which the second body is swung to expose a portion of the first body may be called an open configuration.

The folder type mobile terminal and the swing type mobile terminal can be easily know by the person in the art without any explanation, so its detailed description will be omitted.

In the closed configuration, the mobile terminal mainly operates in a standby (or idle) mode, and the standby mode may be released upon user manipulation. The mobile terminal operates mainly in the calling mode or the like in the open configuration, and it can be changed to the standby mode with the lapse of time or upon user manipulation.

The case (or casing, housing, cover, etc.) constituting the external appearance of the first body 200 may include a first front case 220 and a first rear case 225. Various electronic components are installed in the space between the first front case 220 and the first rear case 225. One or more intermediate cases may be additionally disposed between the first front case 220 and the first rear case 225.

The cases may be formed by injection-molding a synthetic resin or may be made of a metallic material such as stainless steel (STS) or titanium (Ti), etc.

The display 151, the audio output module 152, the camera 121 or the first user input unit 210 may be located at the first body, 200, specifically, on the first front case 220 of the first body 200.

The display 151 has been described above with reference to FIG. 1, so its detailed description will be omitted for the sake of brevity.

The audio output unit 152 may be implemented in the form of a speaker or other sound producing device.

The camera 121 may be implemented to be suitable for capturing images or video with respect to the user and other objects.

Like the first body 200, the case constituting the external appearance of the second body 205 may include a second front case 230 and a second rear case 235.

A second user input unit 215 may be disposed at the second body, specifically, at a front face of the second body 205.

A third user input unit 245, the microphone 122, the interface unit 170 may be disposed on at least one of the second front case 230 and the second rear case 235.

The first to third user input units 210, 215 and 245 may be generally referred to as a manipulating portion130, and various methods and techniques can be employed for the manipulation unit so long as they can be operated by the user in a tactile manner.

For example, the user input units 130 can be implemented as dome switches, actuators, or touch pad regions that can receive user commands or information according to the user's touch operations (e.g., pressing, pushing, swiping, drag-and-drop, etc.) or may be implemented in the form of a rotatable control wheel (or disc), keys or buttons, a jog dial, a joystick, or the like.

In terms of their functions, the first user input unit 210 is used for inputting (entering) commands such as start, end, scroll or the like, and the second user input unit 215 is used for inputting (entering) numbers, characters, symbols, or the like. The first user input unit 210 may include a soft key used by interworking with icons displayed on the display 151 and navigation key (largely including four direction keys and a central key) for indicating and checking directions.

Also, the third user input unit 245 may support the so-called hot key functions that allow more convenient activation of particular functions for the mobile terminal.

The microphone 122 (or other sound pick-up device) may be appropriately implemented to detect user voice inputs, other sounds, and the like.

The interface unit 170 may be used as a communication link (or passage, path, etc.) through which the terminal can exchange data or the like with an external device. The interface unit 170 has been described above with reference to FIG. 1, so its detailed description will be omitted.

The power supply unit 190 for supplying power to the terminal may be located at the second rear case 235.

The power supply unit 190 may be, for example, a rechargeable battery that can be detached.

FIG. 3 is a rear perspective view of the mobile terminal of FIG. 2 according to an exemplary embodiment.

As shown in FIG. 3, a camera 121 (or other image pick-up device) may additionally be disposed on a rear surface of the second rear case 235 of the second body 205. The camera 121 of the second body 205 may have an image capture direction which is substantially opposite to that of the camera 121 of the first body 200 (namely, the two cameras may be implemented to face towards opposing directions, such as front and rear), and may support a different number of pixels (i.e., have a different resolution) than the camera 121 of the first body.

For example, the camera of the first body 200 may operate with a relatively low resolution to capture an image(s) of the user's face and immediately transmit such image(s) to another party in real-time during video call communication or the like in which reverse link bandwidth capabilities may be limited. Also, the camera of the second body 205 may operate with a relatively high resolution to capture images of general objects with high picture quality, which may not require immediately transmission in real-time, but may be stored for later viewing or use.

Additional camera related components, such as a flash 250 and a mirror 255, may be additionally disposed adjacent to the camera 121. When an image of the subject is captured with the camera 121 of the second body 205, the flash 250 illuminates the subject. The mirror 255 allows the user to see himself when he wants to capture his own image (i.e., self-image capturing) by using the camera 121 of the second body 205.

The second rear case 235 may further include an audio output module 152. The audio output module 152 of the second body 205 may support stereophonic sound functions in conjunction with the audio output module 152 of the first body 200 and may be also used for sending and receiving calls in a speaker phone mode.

A broadcast signal receiving antenna 260 may be disposed (externally or internally) at one side or region of the second rear case 235, in addition to an antenna that is used for mobile communications. The antenna 260 can also be configured to be retractable from the second body 205.

One part of a slide module 265 that allows the first body 200 and the second body 205 to slide relative to each other may be disposed on the first rear case 225 of the first body 200.

The other part of the slide module 265 may be disposed on the second front case 230 of the second body 205, which may not be exposed as shown in the drawing,

The second camera 121 and other components may be disposed on the second body 205, but such configuration is not meant to be limited.

For example, one or more of the elements (e.g., 260, 121 and 250 and 152 etc.), which are disposed on the second rear case 235 may be mounted on the first body 200, mainly, on the first rear case 225. In this case, those elements disposed on the first rear case 225 can be protected (or covered) by the second body 205 in the closed configuration. In addition, even if a separate camera is not provided at the second body, the camera module 121 may be configured to rotate (or otherwise be moved) to thus allow image capturing in various directions.

The mobile terminal 100 as shown in FIGs. 1 to 3 may be configured to operate with a communication system, which transmits data via frames or packets, such as wired and wireless communication systems, as well as satellite-based communication systems.

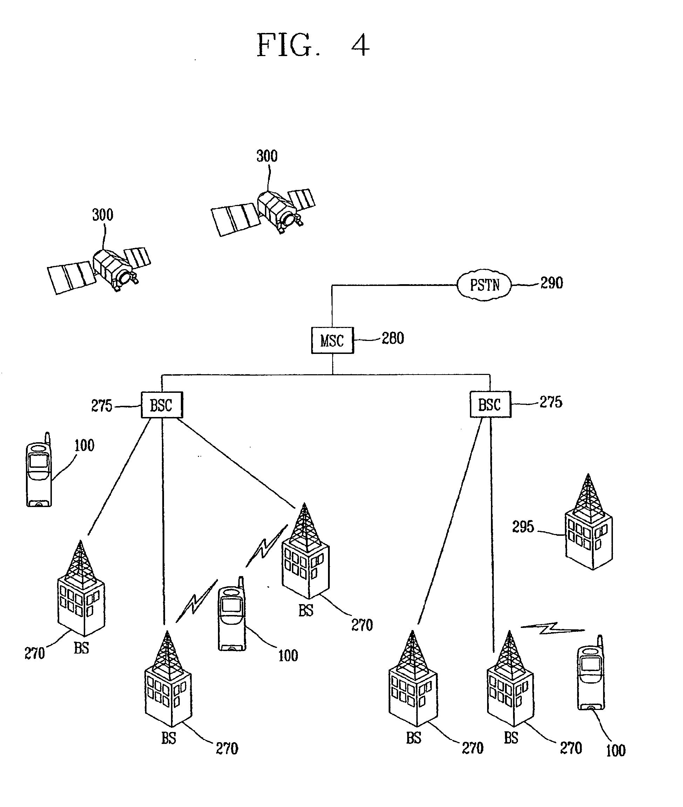

Such communication systems in which the mobile terminal according to the present invention can operate will now be described with reference to FIG. 4.

Such communication systems may use different air interfaces and/or physical layers. For example, air interfaces utilized by the communication systems include example, frequency division multiple access (FDMA), time division multiple access (TDMA), code division multiple access (CDMA), and universal mobile telecommunications system (UMTS) (in particular, long term evolution (LTE)), global system for mobile communications (GSM), and the like. As a non-limiting example, the description hereafter relates to a CDMA communication system, but it applies equally to other types of systems.

Referring to FIG. 4, a CDMA wireless communication system may include a plurality of mobile terminals 100, a plurality of base stations (BSs) 270, base station controllers (BSCs) 275, and a mobile switching center (MSC) 280. The MSC 280 is configured to interface with a public switch telephone network (PSTN) 290. The MSC 280 is also configured to interface with the BSCs 275, which may be coupled to the base stations 270 via backhaul lines. The backhaul lines may be configured in accordance with any of several known interfaces including, for example, E1/T1, ATM, IP, PPP, Frame Relay, HDSL, ADSL, or xDSL. It is to be understood that the system as shown in FIG. 4 may include a plurality of BSCs 275.

Each BS 270 may serve one or more sectors (or regions), each sector covered by an omni-directional antenna or an antenna pointed in a particular direction radially away from the BS 270. Alternatively, each sector may be covered by two or more antennas for diversity reception. Each BS 270 may be configured to support a plurality of frequency assignments, and each frequency assignment has a particular spectrum (e.g., 1.25 MHz, 5 MHz, etc).

The intersection of a sector and frequency assignment may be referred to as a CDMA channel. The BS 270 may also be referred to as base station transceiver subsystems (BTSs) or other equivalent terms. In such case, the term "base station" may be used to collectively refer to a single BSC 275 and at least one BS 270. The base station may also be referred to as a "cell site". Alternatively, individual sectors of a particular BS 270 may be referred to as a plurality of cell sites.

As shown in FIG. 4, a broadcasting transmitter (BT) 295 transmits a broadcast signal to the mobile terminals 100 operating within the system. The broadcast receiving module 111 as shown in FIG. 1 is provided at the terminal 100 to receive broadcast signals transmitted by the BT 295.

In FIG. 4, several global positioning systems (GPS) satellites 300 are shown. The satellites 300 help locate at least one of a plurality of terminals 100.

In FIG. 4, two satellites 300 are depicted, but it is understood that useful positioning information may be obtained with other numbers of satellites, especially three or more. The GPS module 115 as shown in FIG. 1 is typically configured to cooperate with the satellites 300 to obtain desired positioning information.

Instead of or in addition to GPS tracking techniques, other technologies that may track the location of the mobile terminals may be used. In addition, at least one of the GPS satellites 300 may selectively or additionally handle satellite digital multimedia broadcasting (DMB) transmissions.

As one typical operation of the wireless communication system, the BSs 270 receive reverse-link signals from various mobile terminals 100. The mobile terminals 100 typically engaging in calls, messaging, and other types of communications. Each reverse-link signal received by a particular base station 270 is processed within the particular BS 270.

The resulting data is forwarded to an associated BSC 275. The BSC provides call resource allocation and mobility management functionality including the coordination of soft handoff procedures between BSs 270. The BSCs 275 also route the received data to the MSC 280, which provides additional routing services for interfacing with the PSTN 290. Similarly, the PSTN 290 interfaces with the MSC 280, the MSC interfaces with the BSCs 275, and the BSCs 275 in turn control the BSs 270 to transmit forward-link signals to the mobile terminals 100.

A method for automatically performing geotagging in an image capture mode of a mobile terminal according to an embodiment of the present invention will now be described. Geotagging refers to a function of providing location and time information in capturing an image by using a GPS technique.

The controller 180 of the mobile terminal according to the present invention stores image data captured by the camera 121 in an exchangeable image file format (EXIF). The EXIF is an image file format for a digital camera including supplementary information such as an image capture date, time, the size of image data, resolution, a format, or the like, together with image data (photo image, video, etc.). Thus, the controller 180 can effectively manage the image data by using the supplementary information. In addition, the EXIF may include information related to a GPS, e.g., latitude, longitude, altitude, GPS time, atomic clock, geodetic survey data, or the like.

The controller 180 simultaneously drives the location information module115 to acquire location information when the camera is driven. The location information module115 calculates location information such as the location, the longitude, latitude, altitude, or the like, of the point where the terminal is located, and receives time information from satellites.

In other words, when the camera function is selected by the user input unit 130, the controller 180 drives the camera 121 and checks whether or not a geotagging function has been set. If the geotagging function has been set, the controller 180 drives the location information module. The controller 180 periodically receives location information from the location information module115.

When the location information module starts acquiring location information, the controller 180 displays an indicator indicating whether or not location information has been acquired on a display screen. Here, the indicator may be implemented as an icon.

The controller 180 may change the icon according to a state of acquiring the location information in progress or may change the color of the icon, or may vary the method of indicating an icon to allow a user to easily recognize it. For example, the controller 180 may display the icon by giving a blinking effect at certain time intervals in the course of acquiring the location information, and when the location information is completely acquired, the controller 180 may release the blinking effect.

When the location information module115 is driven, the controller 180 may output a notification message such as 'positioning starts', and when acquisition of location information is completed, the controller 180 may output a notification message such as 'acquiring of location information is completed', to thereby inform the user that location information has been acquired.

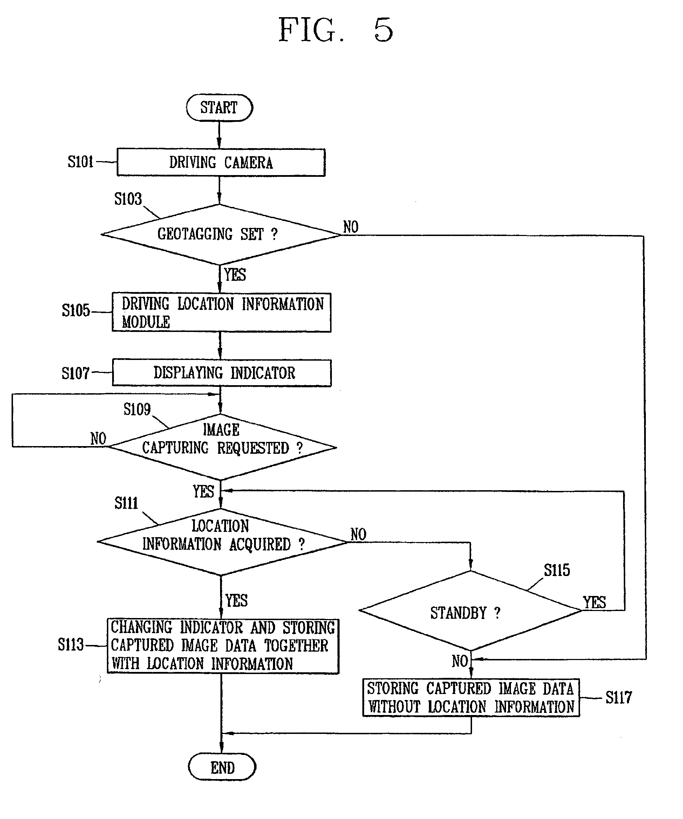

FIG. 5 is a flow chart illustrating a geotagging method of a mobile terminal according to an embodiment of the present invention;

First, when a camera function select signal is input from the user input unit 130, the controller 180 drives the camera 121 (S101). At this time, the controller 180 displays an image capturing screen image on a display screen to allow capturing of an image.

When the camera 121 is driven, the controller 180 checks whether geotagging function has been set (S103). The geotagging function may be set by manipulating main menu on a standby mode (background image) or set by manipulating a menu in the image capture mode (image capturing screen image). Namely, in the present invention, geotagging function can be set or released while image capturing is being performed.

When the geotagging function has been set, the controller may drive the location information module115 (S105). Subsequently, the controller 180 displays an indicator based on pre-set information in relation to the geotagging function (S107). Here, the indicator may be implemented as an icon and displays whether or not location information has been acquired. Namely, the controller 180 may change the displayed icon or the color of the icon displayed according to whether or not the location information has been acquired. Whether to display the indicator or how to display the indicator may be set when the geotagging function is set.

With the indicator informing the user whether or not location information has been acquired displayed on the image capturing screen image, if image capturing is requested, the controller 180 checks whether acquiring of location information has been completed (S109, S111). Namely, when an image capturing command is input from the user input unit 130, the controller 180 checks whether or not location information has been acquired through the location information module115.

If acquiring of the location information has been completed, the controller 180 changes the indicator displayed on the image capturing screen image, and stores captured image data together with the acquired location information (S113). In this case, the controller 180 may cause the display to display a notification message informing that the location information is being stored together with the image data, on the display screen.

If acquiring of location information has not been completed in step S111, the controller 180 checks whether to wait until acquiring of location information is completed based on the information set in relation to the geotagging (S115). Here, the controller 180 outputs a message inquiring as to whether to wait until acquiring of location information is completed on the image capturing screen image, and determines whether to wait according to a response of the user to the inquiry.

When it is determined to wait until acquiring of location information is completed in step S115, the process returns to the step S111 and the controller 180 waits until acquiring of location information is completed. When acquiring of location information is completed, the controller 180 stores the acquired location information on the captured image data.

Meanwhile, if it is determined not to wait until acquiring of location information is completed in step S115, the controller 180 stores only the captured image data without location information (S117). At this time, the controller 180 may cause the display to display a notification message informing that only the captured image data is stored without location information.

Thereafter, when termination of the camera function is requested, the controller 180 stops driving of the camera 121. At this time, the controller 180 may determine whether also to stop the location information module115 according to whether or not the geotagging function has been set. Namely, if the location information module115 is operated based on set geotaggging function, the controller also stops the operation of the camera 121.

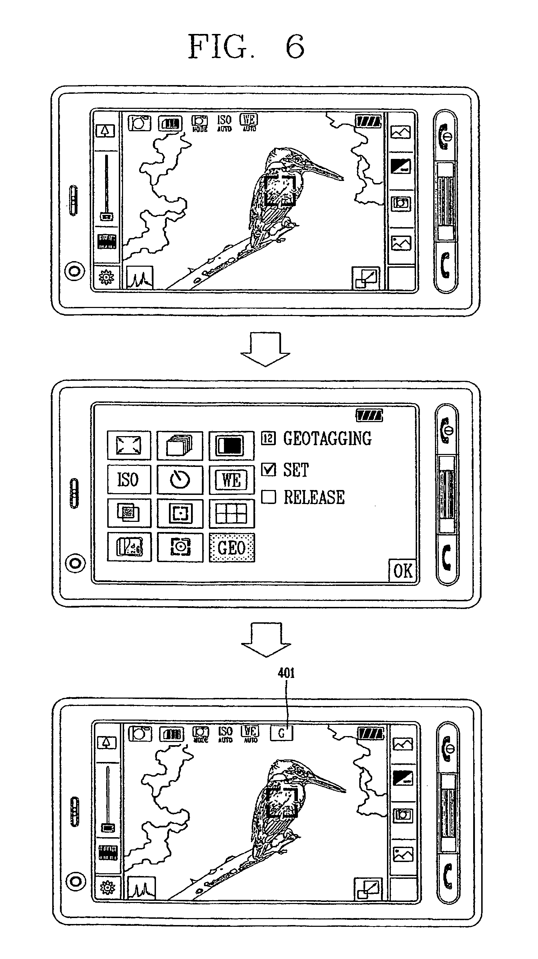

FIG. 6 is a view of screen displays showing one example of setting the geotagging function in the mobile terminal according to an embodiment of the present invention.

With reference to FIG. 6, when a camera function is selected via the user input unit 130, the controller 180 drives the camera 121 and displays a preparation screen image for capturing an image (image capturing screen image) on the display screen.

When a menu for setting a camera environment is selected on the image capturing screen image, the controller 180 displays the camera environment setting screen image on the display screen. The geotagging function is selected from the displayed environment setting screen image and set.

When the geotagging function is set, the controller 180 displays an indicator 401 informing that the geotagging function has been set, on the image capturing screen image. Accordingly, the user can ascertain as to whether or not the geotagging has been set through the indicator 401.

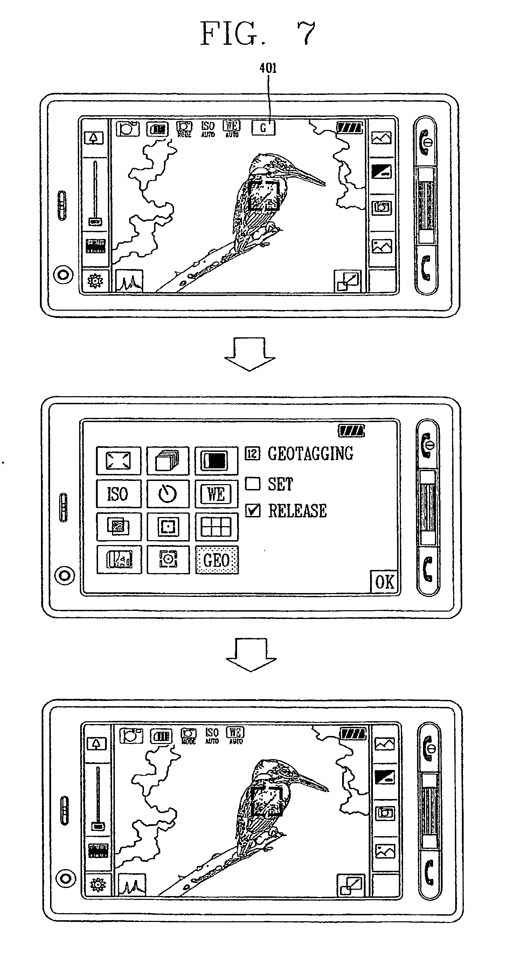

FIG. 7 is a view of screen displays showing one example of releasing the geotagging function in the mobile terminal according to an embodiment of the present invention.

As shown in FIG. 7, when the camera 121 is driven, the controller 180 checks whether or not the geotagging function has been set based on the pre-set camera environment setting information. If the geotagging function has been set, the controller 180 drives the location information module115, and displays an indicator 401 informing that the geotagging function is being executed on the display screen.

Thereafter, when the geotagging function is desired to be released, the controller 180 displays a setting screen image for setting a camera environment according to manipulation of menu in the image capture mode on the display screen. When the release of the geotagging function is selected on the setting screen image and an 'OK' button is selected, the controller 180 releases the geotagging function and stores the changed environment setting information in the memory 160. The controller stops displaying of the indicator 401 on the display screen image.

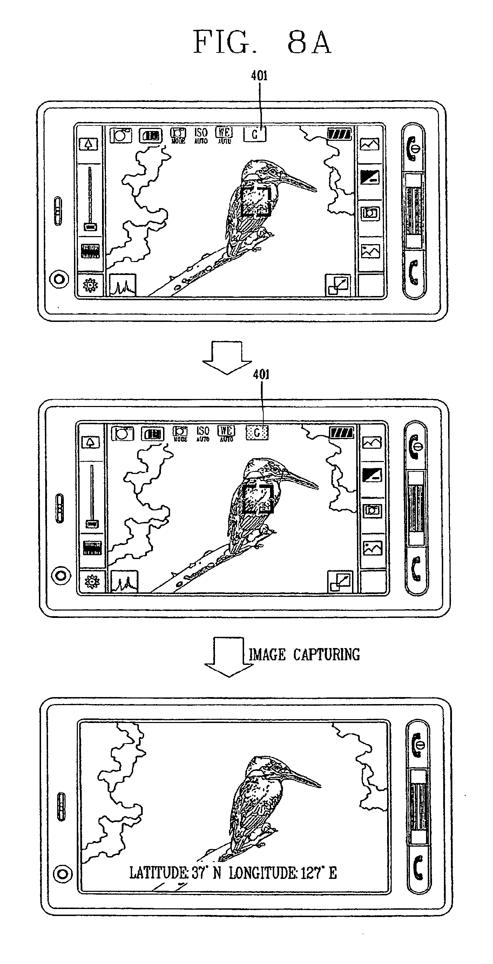

FIGs. 8A to 8C are views of screen displays showing an example of performing geotagging after acquiring location information in the mobile terminal according to one embodiment of the present invention.

With reference to FIG. 8A, when the camera function is selected by the user, the controller 180 drives the camera 121 and the location information module115, and displays a subject recognized through the camera 121 on the display screen. And, the controller 180 displays the indicator 401 informing that the geotagging function has been set.

When location information is acquired by the location information module115, the controller 180 changes the displayed indicator 401. For example, the indicator of red color may be displayed while the location information is being acquired, and when the acquiring of the location information is completed, the indicator may be displayed in green color.

After the location information is acquired, when an image capture button isdepressed, the controller 180 tags the location information, which has been acquired by the location information module115, to the image data captured by the camera 121. Namely, the controller 180 stores the image data and the location information together. Here, the controller 180 may display the geotagged image data in the form of a preview on the display screen.

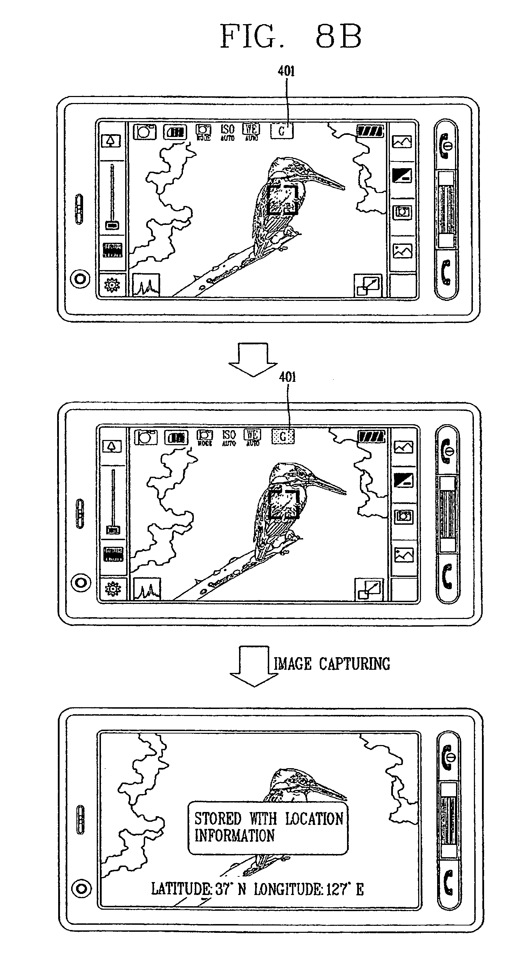

As shown in FIG. 8B, after the location information is acquired by the location information module115, when the image capture button is depressed, the controller 180 performs geotagging on the captured image data. Namely, the controller 180 stores the captured image data together with the location information. At this time, the controller displays a notification message 'location information is also stored' on the display screen to inform the user that the location information is stored together with the captured image data. In addition, the controller 180 may display the notification message together with a preview screen image of the tagged image data.

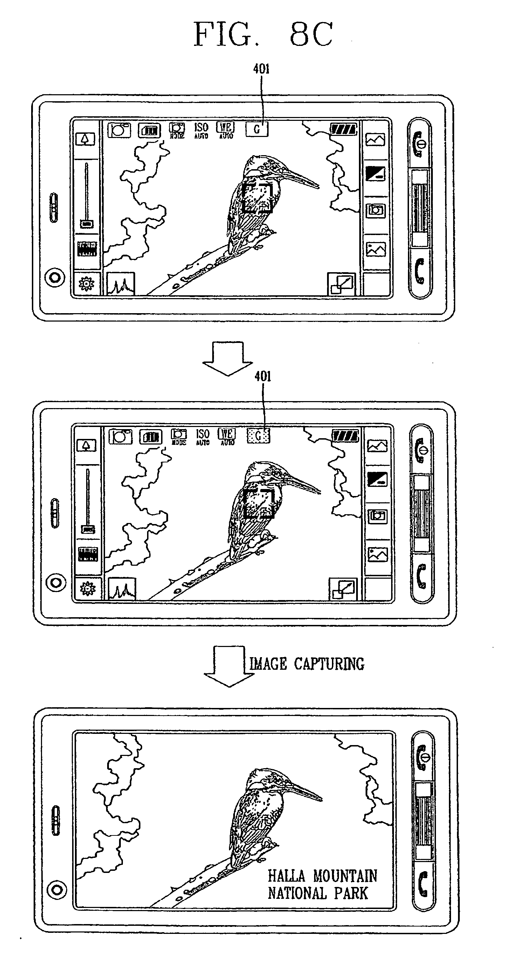

With reference to FIG. 8C, when the camera 121 is driven, the controller 180 drives the location information module115 and causes the indicator 401 to display whether or not the location information has been acquired by the location information module115. After acquisition of the location information is completed, when an image capture instruction is input from the user input unit 130, the controller 180 controls the camera 121 to capture an image of a subject and generate image data. The controller 180 tags geographical information (address information) mapped to the acquired location information to the generated image data. The geographical information may include the name of a place, an address, the name of a building, the name of a road, or the like. As for the geographical information, map information may be made to database and stored in an internal/external memory or in an external terminal and a server. When updating of map information such as a move between countries is required, geographical information may be received from the external terminal or the server through wireless communication. Namely, geographical information mapped to location information acquired by the location information module115 can be received through wireless communication with a geographical information system (GIS).

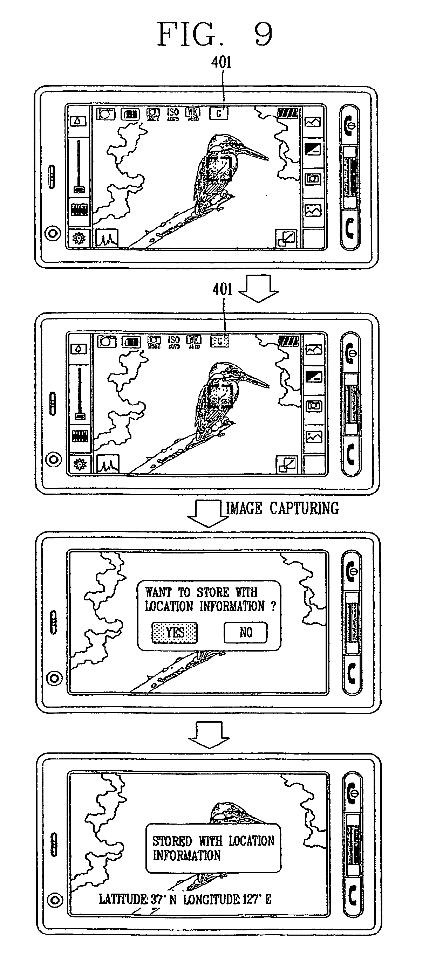

FIG. 9 is a view of screen displays showing an example of performing geotagging after acquiring location information in the mobile terminal according to another embodiment of the present invention.

First, when the camera function is selected through a user input, the controller 180 drives the camera 121 and the location information module115 and displays the indicator 401 informing the user that the location information module115 is being driven on the display screen. Accordingly, the user ascertains through the indicator whether or not the geotagging function has been set and whether or not location information has been acquired.

Thereafter, when location information is acquired by the location information module115, the controller 180 changes the displayed indicator 401. For example, the controller 180 may change the icon displayed as the indicator 401 or the color of the indicator 401.

After the location information is completely acquired, when a request for image capturing is input from the user, the controller 180 displays a message inquiring whether or not the captured image data is to be stored together with the acquired location information on the display screen.

According to a response from the user with respect to the display inquiry message, the controller 180 determines whether to store the acquired location information. For example, if the user selects 'Yes', the controller 180 tags the acquired location information to the captured image data. Namely, the controller 180 stores the acquired location information together with the captured image data. At this time, the controller 180 may display a notification message that the captured image data is stored together with the location information.

If the user selects 'No', the controller stores only the captured image data without the location information.

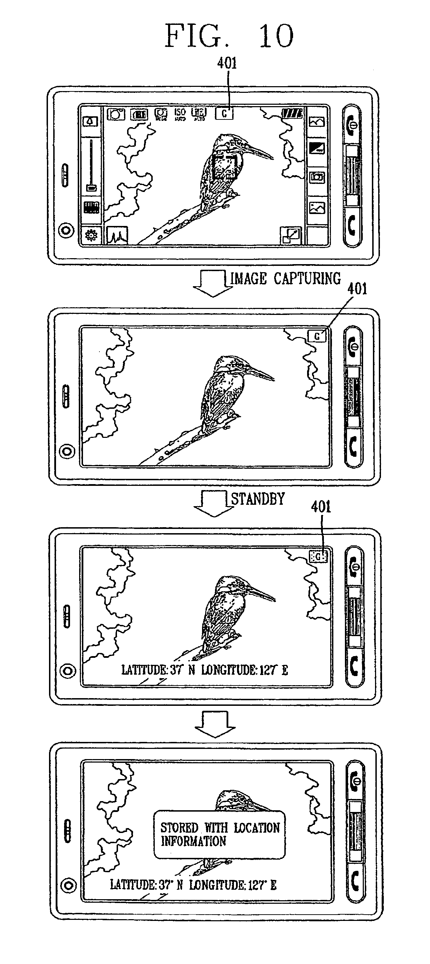

FIG. 10 is a view of screen displays showing one example of performing geotagging in the mobile terminal according to an embodiment of the present invention.

With reference to FIG. 10, when the camera function is selected, the controller 180 drives the camera 121 and the location information module115 and displays the indicator 401 informing that the geotagging function has been set.

If image capturing is required by the user before acquisition of location information by the location information module is completed, the controller displays a preview image of the captured image data on the display screen. At this time, the controller 180 displays the indicator 401 informing the user whether or not the location information has been acquired on the preview screen image.

When the location information is completely acquired, the controller 180 changes the indicator 401 to display the indicator 401 corresponding to completion of acquiring of the location information, and tags the acquired location information to the image data displayed on the preview screen image.

Subsequently, the controller 180 may store the captured image data together with the acquired location information, and display a notification message to inform about that together.

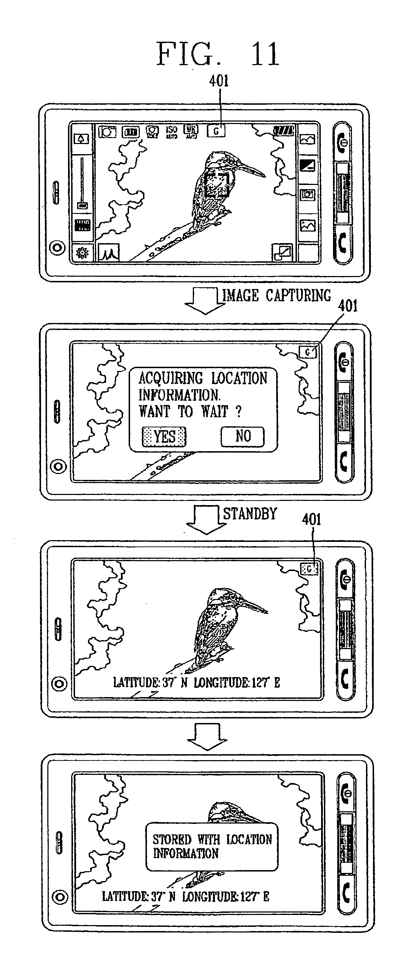

FIG. 11 is a view of screen displays showing another example of performing geotagging in the mobile terminal according to an embodiment of the present invention.

When the camera function is selected, the controller 180 drives the camera 121 and the location information module115, and displays the indicator 401 informing that the geotagging function has been set.

When image capturing is requested by the user before acquiring of the location information by the location information module115 is completed, the controller 180 displays a message informing that acquiring of the location information has not been completed and a message requesting the user to indicate whether to wait until acquiring of the location information is completed.

Thereafter, the controller 180 checks a response to the displayed messages input from the user input unit 130. If the user wants to wait until the location information is completely acquired, the controller 180 waits until the location information acquired by the location information module115 is received.

When the location information acquired by the location information module is received, the controller 180 tags the acquired location information to a preview screen image of the captured image data displayed on the display screen. In addition, the controller 180 displays the indicator 401 informing that acquiring of the location information has been completed.

Subsequently, the controller 180 stores the captured image data together with the location information. At this time, the controller 180 displays a notification message informing that the captured image data is stored together with the location information.

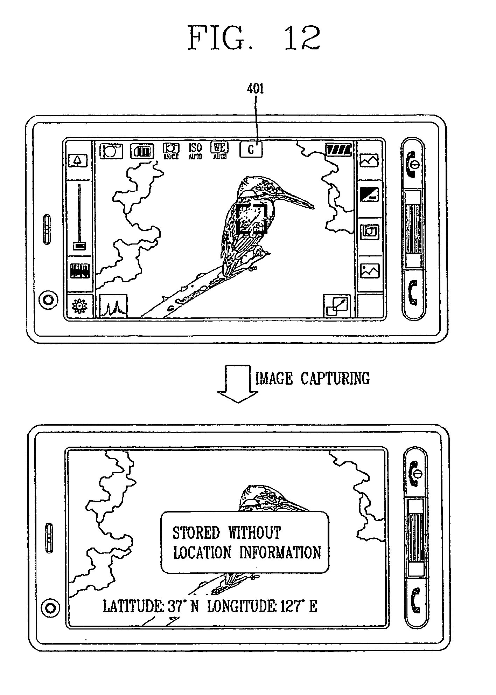

FIG. 12 is a view of screen displays showing still another example of performing geotagging in the mobile terminal according to an embodiment of the present invention.

When the camera function is selected, the controller 180 drives the camera 121 and the location information module115 and displays the indicator 401 informing that the geotagging function has been set.

When image capturing is requested by the user before acquiring of location information by the location information module115 is completed, the controller 180 stores only captured image data without location information. At this time, the controller 180 displays a notification message 'image data is stored without location information' on the display screen to inform that only image data is stored without location information.

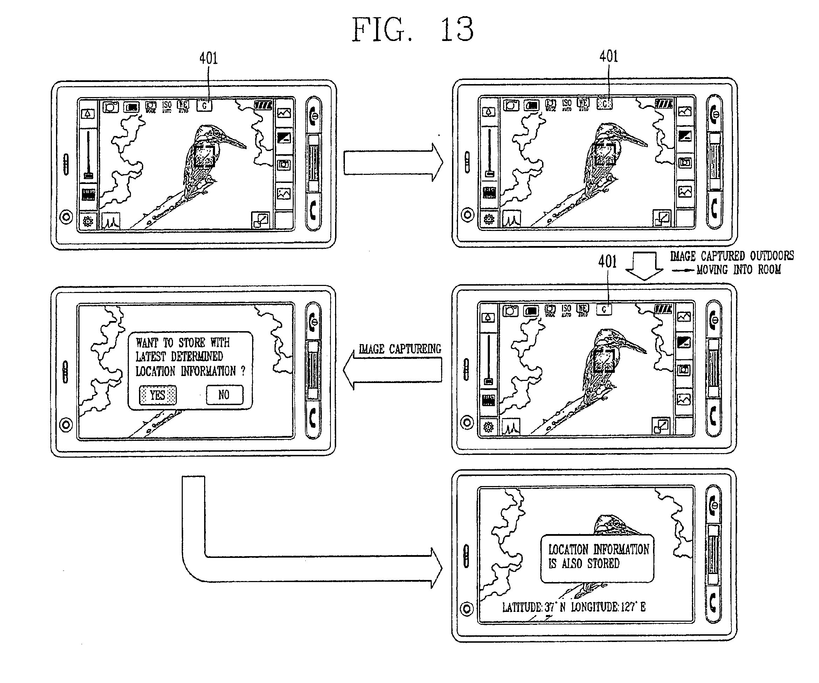

FIG. 13 is a view of screen displays showing yet another example of performing geotagging in the mobile terminal according to an embodiment of the present invention. In this embodiment, a case where while image capturing is being performed by using the geotagging function, the user moves to a room in which it is difficult to acquire location information will be described as an example.

When the user selects the camera function through menu manipulation to capture an image by using the mobile terminal 100 outdoors, the controller 180 drives the camera 121 and the location information module115. In addition, the controller 180 displays the indicator 401 informing the user whether location information has been acquired through the location information module. Here, if the state is changed while the location information is acquired to completion of acquiring of the location information, the displayed indicator 401 is changed to the corresponding indicator 401.

Thereafter, when the user moves from outdoor to indoor, the controller 180 attempts acquiring of location information through the location information module115. Accordingly, the controller 180 changes the currently displayed indicator 401 to the indicator 401 mapped to the state of 'acquiring location information' and displays the same.

Thereafter, when an image capturing command is input from the user input unit 130, the controller 180 displays a message inquiring as to whether to tag the lately acquired location information. When a user response to the displayed inquiry message is input, the controller 180 stores also the location information together or stores only the captured image data without the location information according to a user input.

In this embodiment, the case where the message inquiring whether to use the lately acquired location information is output is taken as an example, but it is also possible that geotagging may be performed by using the lately acquired location information without inquiring whether to use the lately acquired location information.

In addition, in the present invention, image data may be grouped to be stored by using the location information and geographical information acquired by the location information module115. Accordingly, when geotagging is performed, the group information of the captured image data can be tagged.

For example, the controller 180 may designate a group in which image data includes location information identical to that of the captured image data. In addition, the controller 180 may tag the designated group information to the captured image data.

In the embodiments of the present invention, the above-described method can be implemented as codes that can be read by a computer in a program-recorded medium. The computer-readable medium may include various types of recording devices in which data read by a computer system is stored. The computer-readable medium may include a ROM, a RAM, a CD-ROM, a magnetic tape, a floppy disk, an optical data storage device, and the like. The computer-readable medium also includes implementations in the form of carrier waves or signals (e.g., transmission via the Internet). The computer may include the controller 180 of the terminal.

The mobile terminal according to the above-described embodiments can tag location information to captured image data simultaneously when the image is captured by driving the location information module when the camera is driven to measure location information.

In addition, in using geotagging, an additional manipulation is not required to acquire location information, and time taken to wait for acquiring location information can be reduced.

Moreover, because the image capturing operation and the location information measuring operation are independently performed, an influence of the measurement of the location on the image capturing can be minimized in performing geotagging.

Furthermore, because whether or not the location information has been acquired is displayed by an indicator, the user can easily recognize whether or not the location information has been acquired.

Also, geographical information mapped to location information can be tagged to captured image data by using the geographical information in database.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims.

## Claims

1. A mobile terminal (100) comprising:
a camera (121) for capturing an image of a subject;
a location information module (115) for acquiring current location information of the mobile terminal; and
a controller (180) for driving the location information module, automatically when the camera is driven, the controller being configured to tag the location information to the image of the subject if image capturing is requested once acquiring of the location information is completed **characterized in that** the controller is further configured:
(i) for displaying a message informing a user of the mobile terminal that the acquiring of the location information is not completed and a message requesting the user to indicate whether to wait until the acquiring of the location information is completed if the image capturing is requested while the location information is being acquired; and
(ii) for checking a response of the user to the request, and waiting until the acquiring of the location information is completed in response to an input by the user thereof and tagging the location information to the image of the subject once the acquiring of the location information is completed, or storing the image without the location information in response to an input by the user thereof.

2. The mobile terminal of claim 1, wherein the controller is operable to cause a display (151) of the mobile terminal to display an indicator that indicates a state of the acquiring of the location information.

3. The mobile terminal of claim 1, wherein the controller is operable to change an icon (401) or a color of the icon displayed according to a state of whether acquiring of the location information has been completed or not.

4. The mobile terminal of claim 1, wherein the controller is operable to tag geographical information to the image of the subject, the geographical information being mapped to the location information.

5. A method of geotagging in a mobile terminal, the method comprising:
driving a location information module automatically when camera driving is requested (S105);
capturing an image of a subject through the camera; and
performing tagging on the image of the subject by using location information acquired by the location information module ;
**characterized in that** the method further comprises:
(i) displaying a message informing a user of the mobile terminal that the acquiring of the location information is not completed and a message requesting the user to indicate whether to wait until the acquiring of the location information is completed if the image capturing is requested while the location information is being acquired (S109, S111); and
(ii) checking a response of the user to the request, and waiting until the acquiring of the location information is completed in response to an input by the user thereof and tagging the location information to the image of the subject once the acquiring of the location information is completed (S113), or storing the image of the subject without the location information in response to an input by the user thereof (S117).

6. The method of claim 5, wherein the driving of the location information module comprises:
displaying an indicator whether or not the location information has been acquired by the location information module.

7. The method of claim 5, wherein tagging the location information further comprises:
storing the location information and the image data together to a memory of the mobile terminal.

8. The method of claim 5, wherein, tagging the location information comprises mapping geographical information to the location information tagged to the image of the subject.

9. The method of claim 5, wherein, in tagging the location information, if the acquiring of the location information fails because the mobile terminal moves while the image of the subject is being captured by using geotagging, the most lately acquired location information is tagged to the image of the subject.

10. The method of claim 5, wherein, in tagging the location information, the image of the subject is grouped and stored by using the acquired location information and geographical information in a database.

11. A computer readable medium that stores a computer program comprising computer-implementable instructions for causing a mobile terminal to perform a method as claimed in any one of claims 5 to 10.

## Patentansprüche

1. Mobiles Endgerät (100), aufweisend:
eine Kamera (121) zur Aufnahme eines Bilds eines Gegenstands,
ein Ortsinformationsmodul (115) zur Erfassung laufender Ortsinformation des mobilen Endgeräts, und
eine Steuereinrichtung (180) zum Betreiben des Ortsinformationsmoduls automatisch, wenn die Kamera betrieben wird, wobei die Steuereinrichtung konfiguriert ist, um die Ortsinformation dem Bild des Gegenstands zuzuordnen, wenn eine Bildaufnahme angefordert wird, nachdem eine Erfassung der Ortsinformation vollendet ist, **dadurch gekennzeichnet, dass** die Steuereinrichtung weiter konfiguriert ist
(i) zum Anzeigen einer Mitteilung, die einen Benutzer des mobilen Endgeräts darüber informiert, dass die Erfassung der Ortsinformation nicht vollendet ist, und einer Mitteilung, die den Benutzer auffordert anzuzeigen, ob er wartet, bis die Erfassung der Ortsinformation vollendet ist, wenn die Bildaufnahme angefordert wird während die Ortsinformation gerade erfasst wird, und
(ii) zum Prüfen einer Reaktion des Benutzers auf die Aufforderung und Warten, bis die Erfassung der Ortsinformation in Reaktion auf eine Eingabe durch den Benutzer des Endgeräts vollendet ist, und Zuordnen der Ortsinformation dem Bild des Gegenstands nachdem die Erfassung der Ortsinformation vollendet ist, oder Speichern des Bilds ohne die Ortsinformation in Reaktion auf eine Eingabe durch den Benutzer des Endgeräts.

2. Mobiles Endgerät nach Anspruch 1, wobei die Steuereinrichtung betriebsfähig ist zum Bewirken einer Anzeige (151) des mobilen Endgeräts zum Anzeigen eines Indikators, der einen Zustand der Erfassung der Ortsinformation anzeigt.

3. Mobiles Endgerät nach Anspruch 1, wobei die Steuereinrichtung betriebsfähig ist zum Ändern eines Ikons (401) oder einer Farbe des Ikons, das bzw. die entsprechend einem Zustand, ob die Erfassung der Ortsinformation vollendet worden ist oder nicht, angezeigt wird.

4. Mobiles Endgerät nach Anspruch 1, wobei die Steuereinrichtung betriebsfähig ist zum Zuordnen geografischer Information dem Bild des Gegenstands, wobei die geografische Information auf die Ortsinformation abgebildet wird.

5. Verfahren zum Geotagging in einem mobilen Endgerät, wobei das Verfahren aufweist:
Betreiben eines Ortsinformationsmoduls automatisch, wenn ein Kamerabetrieb angefordert wird (S 105),
Aufnehmen eines Bilds eines Gegenstands durch die Kamera und
Ausführen eines Zuordnens von Information bezüglich des Bilds des Gegenstands durch Benutzen der vom Ortsinformationsmodul erfassten Ortsinformation,
**dadurch gekennzeichnet, dass** das Verfahren weiter aufweist:
(i) Anzeigen einer Mitteilung, die einen Benutzer des mobilen Endgeräts darüber informiert, dass die Erfassung der Ortsinformation nicht vollendet ist, und einer Mitteilung, die den Benutzer auffordert, anzuzeigen, ob er wartet, bis die Erfassung der Ortsinformation vollendet ist, wenn die Bildaufnahme angefordert wird während die Ortsinformation erfasst wird (S 109, S 111), und
(ii) Prüfen einer Reaktion des Benutzers auf die Aufforderung und Warten, bis die Erfassung der Ortsinformation in Reaktion auf eine Eingabe durch den Benutzer des Endgeräts vollendet ist, und Zuordnen der Ortsinformation dem Bild des Gegenstands nachdem die Erfassung der Ortsinformation vollendet ist (S113), oder Speichern des Bilds des Gegenstands ohne die Ortsinformation in Reaktion auf eine Eingabe durch den Benutzer des Endgeräts (S 117).

6. Verfahren nach Anspruch 5, wobei der Betrieb des Ortsinformationsmoduls aufweist:
Anzeigen eines Indikators, ob die Ortsinformation durch das Ortsinformationsmodul erfasst worden ist oder nicht.

7. Verfahren nach Anspruch 5, wobei das Zuordnen der Ortsinformation weiter aufweist:
Speichern der Ortsinformation und der Bilddaten zusammen in einem Speicher des mobilen Endgeräts.

8. Verfahren nach Anspruch 5, wobei das Zuordnen der Ortsinformation Abbilden von geografischer Information auf die dem Bild des Gegenstands zugeordnete Ortsinformation aufweist.

9. Verfahren nach Anspruch 5, wobei beim Zuordnen der Ortsinformation, wenn die Erfassung der Ortsinformation ausfällt, weil sich das mobile Endgerät während das Bild des Gegenstands durch Benutzung des Geotaggings aufgenommen wird bewegt, die am spätesten erfasste Ortsinformation dem Bild des Gegenstands zugeordnet wird.

10. Verfahren nach Anspruch 5, wobei beim Zuordnen der Ortsinformation das Bild des Gegenstands gruppiert und durch Benutzung der erfassten Ortsinformation und geografischen Information in einer Datenbank gespeichert wird.

11. Computerlesbares Medium, das ein Computerprogramm speichert, welches Computer-implementierbare Anweisungen zum Veranlassen eines mobilen Endgeräts, ein Verfahren nach einem der Ansprüche 5 bis 10 auszuführen, aufweist.

## Revendications

1. Terminal mobile (100) comprenant :
une caméra (121) destinée à capturer une image d'un sujet ;
un module d'informations de localisation (115) destiné à acquérir des informations de localisation en cours du terminal mobile ; et
un contrôleur (180) destiné à commander le module d'informations de localisation, automatiquement, lorsque la caméra est commandée, le contrôleur étant configuré de manière à baliser les informations de localisation au niveau de l'image du sujet si une capture d'image est requise une fois que l'acquisition des informations de localisation est terminée, **caractérisé en ce que** le contrôleur est en outre configuré de manière à :
(i) afficher un message informant un utilisateur du terminal mobile que l'acquisition des informations de localisation n'est pas terminée, et un message demandant à l'utilisateur d'indiquer s'il convient d'attendre jusqu'à ce que l'acquisition des informations de localisation soit terminée si la capture d'image est requise alors que les informations de localisation sont en cours d'acquisition ; et
(ii) vérifier une réponse de l'utilisateur à la demande, et attendre jusqu'à ce que l'acquisition des informations de localisation soit terminée en réponse à une entrée de l'utilisateur connexe, et baliser les informations de localisation au niveau de l'image du sujet une fois que l'acquisition des informations de localisation est terminée, ou stocker l'image sans les informations de localisation en réponse à une entrée de l'utilisateur connexe.

2. Terminal mobile selon la revendication 1, dans lequel le contrôleur est exploitable de manière à amener un affichage (151) du terminal mobile à afficher un indicateur qui indique un état de l'acquisition des informations de localisation.

3. Terminal mobile selon la revendication 1, dans lequel le contrôleur est exploitable de manière à modifier une icône (401) ou une couleur de l'icône affichée en fonction d'un état indiquant si l'acquisition des informations de localisation est terminée ou non.

4. Terminal mobile selon la revendication 1, dans lequel le contrôleur est exploitable de manière à baliser les informations géographiques au niveau de l'image du sujet, les informations géographiques étant mises en correspondance avec les informations de localisation.

5. Procédé de balisage géographique dans un terminal mobile, le procédé comprend les étapes consistant à :
commander un module d'informations de localisation automatiquement lorsqu'une commande de caméra est requise (S 105) ;
capturer une image d'un sujet par le biais de la caméra ; et
mettre en oeuvre un balisage sur l'image du sujet, en utilisant des informations de localisation acquises par le module d'informations de localisation ;
**caractérisé en ce que** le procédé comprend les étapes consistant en outre à :
(i) afficher un message informant un utilisateur du terminal mobile que l'acquisition des informations de localisation n'est pas terminée, et un message demandant à l'utilisateur d'indiquer s'il convient d'attendre jusqu'à ce que l'acquisition des informations de localisation soit terminée si la capture d'image est requise alors que les informations de localisation sont en cours d'acquisition (S 109, S111) ; et
(ii) vérifier une réponse de l'utilisateur à la demande, et attendre jusqu'à ce que l'acquisition des informations de localisation soit terminée en réponse à une entrée de l'utilisateur connexe, et baliser les informations de localisation au niveau de l'image du sujet une fois que l'acquisition des informations de localisation est terminée (S113), ou stocker l'image du sujet sans les informations de localisation en réponse à une entrée de l'utilisateur connexe (S 117).

6. Procédé selon la revendication 5, dans lequel la commande du module d'informations de localisation comprend l'étape consistant à :
afficher un indicateur indiquant si les informations de localisation ont été acquises ou non par le module d'informations de localisation.

7. Procédé selon la revendication 5, dans lequel le balisage des informations de localisation comprend l'étape consistant en outre à :
stocker les informations de localisation et les données d'image conjointement dans une mémoire du terminal mobile.

8. Procédé selon la revendication 5, dans lequel le balisage des informations de localisation comprend l'étape consistant à mettre en correspondance les informations géographiques avec les informations de localisation balisées au niveau de l'image du sujet.

9. Procédé selon la revendication 5, dans lequel, lors du balisage des informations de localisation, si l'acquisition des informations de localisation échoue du fait du déplacement du terminal mobile tandis que l'image du sujet est en cours de capture au moyen d'un balisage géographique, les informations de localisation acquises en dernier sont balisées au niveau de l'image du sujet.

10. Procédé selon la revendication 5, dans lequel, lors du balisage des informations de localisation, l'image du sujet est regroupée et stockée, au moyen des informations de localisation et des informations géographiques acquises, dans une base de données.

11. Support lisible par ordinateur qui stocke un programme informatique comprenant des instructions exécutables par ordinateur pour amener un terminal mobile à mettre en oeuvre un procédé selon l'une quelconque des revendications 5 à 10.
